# EUROPÄISCHE PATENTANMELDUNG

(11) **EP 0 752 354 A1**
(43) Veröffentlichungstag der Anmeldung: **08.01.1997**
(21) Anmeldenummer: 96107002.6
(22) Anmeldetag: 03.05.1996
(51) Int. Cl.: B60T 7/04, B66F 9/075

(54) **Bremsbetätigungseinrichtung für ein Flurförderfahrzeug**

(30) Priorität: 01.07.1995 DE 19524075
(71) Anmelder: Dr.Ing.h.c. F. Porsche Aktiengesellschaft, D-70435 Stuttgart (DE)
(72) Erfinder: Knauss, Hans-Peter, 71229 Leonberg (DE)

(57) **Zusammenfassung**

Bei einem Flurförderfahrzeug (1), insbesondere Stapler mit einer Bremseinrichtung und einer verstellbaren Bodenplatte (2), wird diese über ein Vorrichtung in Hochrichtung geführt und mittels einer Arretiereinrichtung in mehreren Arbeitspositionen gehalten. Die Bodenplatte ist über ein Hubgestell auf einer einseitig des Fahrzeugs angeordneten Säule in Hochrichtung geführt und die Bodenplatte (2) ist als Betätigungsplatte für eine Feststellbremse ausgeführt und mit einer Pedalplatte (4) für eine Betriebsbremse am Hubgestell auf Achsen schwenkbar angelenkt.

## Beschreibung

### Flurförderfahrzeug, insbesondere Stapler mit einer Bremseinrichtung und einer verstellbaren Bodenplatte nach dem Oberbegriff des Anspruchs 1

Auf der EP 0 607 500 A 1 ist eine verstellbare Bodenplatte für ein Flurförderfahrzeug bekannt, die in der Höhe und in der Neigung einstellbar ist. Hierzu ist am Rahmen des Fahrzeuges an einer Seite der Bodenplatte ein Schlitten höhenverstellbar geführt.

Aufgabe der Erfindung ist es, ein Flurförderfahrzeug mit einer ergonomisch an die Bedienperson anpassbaren und verstellbaren Bodenplatte zu schaffen, in die eine Bremsbetätigung für eine Totmannbremse sowie eine Betriebsbremse integriert ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß die in der Höhe einstellbare Bodenplatte gleichzeitig als sogenannte Betätigungsplatte für eine Feststellbremse (Totmannbremse) des Fahrzeuges dient und in der Ebene der Bodenplatte eine Pedalplatte für eine Betriebsbremse angeordnet ist. Die Bodenplatte wird höhenverstellt, damit Bedienpersonen verschiedener Größen den Stapler bei einer ergonomisch richtigen Körperstellung bedienen und fahren können. Die Bodenplatte, sowie die Pedalplatte, sind am Hubgestell gehalten und mit diesem über eine fahrzeugfeste Säule höhenverstellbar geführt.

Gleichzeitig kann in jeder Höhenlage über die Bodenplatte eine Feststellbremse bedient werden, wobei die Pedalbetätigung auf eine Betriebsbremse wirkt. Das Hubgestell ist eine Baueinheit und kann in einfacher Weise hergestellt und montiert werden. Es weist von der auf der fahrzeugfesten Säule angeordneten Schiebehülse quer wegkragende Träger auf, die endseitig am Fahrzeugaufbau gehalten sind. Gleichzeitig ist ein Querträger mit Lagerarmen zur Aufnahme für die Schwenkachsen der Bodenplatte versehen, wobei an Schwenkarmen der Bodenplatte wiederum die Schwenkachse der Pedalplatte angelenkt ist. Die Abstützung der Bodenplatte in horizontaler Lage erfolgt auf Stützen die entsprechend ausgeführt sind.

Die Verstellung des Hubgestells mit der Pedalplatte und der Bodenplatte erfolgt beispielsweise manuell über einen Handgriff. Sie kann aber auch hydraulisch und/oder elektrisch erfolgen. Der Handgriff ist an der Verschiebehülse schwenkbar angebracht. Dieser Handgriff erstreckt sich beispielsweise quer zum Fahrzeug und weist eine Arretiereinrichtung auf, welche die eingenomme Stellung der Bodenplatte in Hochrichtung sichert. Damit die manuelle Verstellung durch Fremdkraft unterstützt werden kann, könnte ein Federelement, beispielsweise eine Gasfeder oder eine Spiralfeder verwendet werden. Es ist auch an eine in verschiedenen Stellungen blockierbare Gasfeder möglich, so daß die mechanisch wirkende Arretiereinrichtung entfallen kann.

Die Feststellbremse wird über die Bodenplatte und die Betriebsbremse über die Pedalplatte betätigt. Hierzu ist ein hydraulischer Steuerkreis mit einem Bremszylinder vorgesehen. Dieser Bremszylinder ist in der Weise aufgebaut, daß die Betriebsbremse unabhängig von der Feststellbremse wirken kann. Der Bremszylinder weist hierzu in Wirkrichtung zwei hintereinander liegende und getrennt wirkende Kolbeneinheiten auf. Die eine Kolbeneinheit ist mit einer Kolbenstange zur Betätigung der Fahrzeugbremse versehen.

Die im Bremszylinder hinten liegende Kolbeneinheit -in bezug auf den Bremshebel- ist beispielsweise zur Betätigung der Feststellbremse über die Bodenplatte ausgelegt, wobei die vornliegende Kolbeneinheit beispielsweise zur Betätigung der Fahrzeugbremse über die Pedalplatte dient. Damit über den hydraulischen Steuerkreis der Bremszylinder bedienbar ist, wirken die Bodenplatte und die Pedalplatte auf auslösende Schalter oder Ventile.

Zum Abbremsen des Fahrzeugs über die Feststellbremse nimmt die Bodenplatte automatisch eine hochgeschwenkte Stellung ein, die dann erzielt wird, wenn die Bedienperson den Stapler verläßt. Eine Feder im Bremszylinder verschiebt beim Hochschwenken die Kolbenstange nach außen und bewirkt eine Bremsbetätigung, so daß der Stapler unmittelbar stehen bleibt. Die Betätigung der Pedalplatte bewirkt ein Bremsen des Fahrzeugs während der Fahrt.

Es ist zur Vereinfachung der Montage und einer Reparatur des Hubgestells möglich, die Säule aus der Hülse in einfacher Weise heranzuziehen.

Ein Ausführungsbeispiel der Erfindung ist in der Zeichnung dargestellt und wird im folgenden näher beschrieben.

Es zeigen:
- Fig. 1: eine Seitenansicht eines Staplers mit höhenverstellbarer und verschwenkbarer Bodenplatte, die in zwei Positionen gezeigt ist,
- Fig. 2: eine Einzelheit der höhenverstellbaren Bodenplatte mit Pedalplatte und Hubgestell in abgesenkter ungebremster Grundstellung,
- Fig. 3: die Bodenplatte in angehobener und arretierter Position bei ungebremster Feststellbremse,
- Fig. 4: die Bodenplatte in angehobener Position und geschwenkter Stellung bei gebremster Feststellbremse,

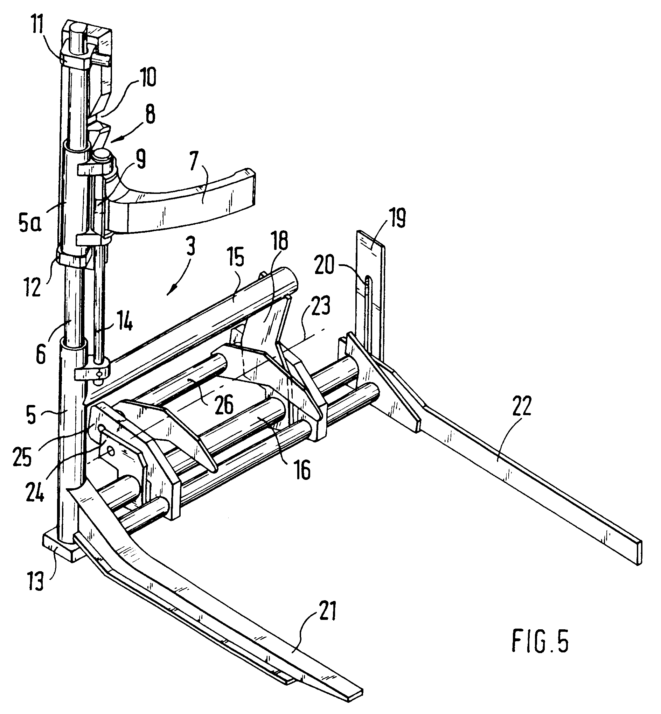

- Fig. 5: das Hubgestell ohne Tritt- und Pedalplatte mit Handgriff und Arretiereinrichtung,
- Fig. 6: ein Bremszylinder mit zwei hintereinander liegenden Kolbeneinheiten in Stellung gebremster Feststellbremse,
- Fig. 7: der Bremszylinder in Stellung gelöster Feststell- und Betriebsbremse und
- Fig. 8: der Bremszylinder in Stellung gelöster Feststellbremse und gebremster Betriebsbremse.

Ein Flurförderfahrzeug 1 ist im Aufbau mit einer Bodenplatte 2 versehen, die über ein Hubgestell 3 höhenverstellbar ist und gleichzeitig mit einer Betriebs- und einer Feststellbremse (Totmannbremse) versehen ist. Hierzu ist die Bodenplatte 2 schwenkbar am Hubgestell 3 gehalten, so daß beim Verlassen des Staplers die Bodenplatte 2 automatisch hochschwenken kann und mittels einer Steuereinrichtung über einen Bremszylinder 4 die Fahrzeugbremse betätigt wird. Desweiteren ist in die Bodenplatte 2 eine Pedalplatte 4 zum Betätigen einer Betriebsbremse integriert. Die Betriebsbremse und die Feststellbremse sind ein und dieselbe Bremse des Fahrzeugs. Die Pedalplatte 4 ist ebenfalls am Gestell 3 angelenkt und mit der Bodenplatte 2 höhenverstellbar.

Das Hubgestell 3 ist über mindestens eine Verschiebehülse 5 und 5a auf einer fahrzeugfesten Säule 6 an einer Seite des Staplers 1 höhenverstellbar gehalten. Mit der Verschiebehülse 5a ist ein Handgriff 7 verschwenkbar verbunden, über welchen das Hubgestell 3 der Bodenplatte 2 angehoben oder abgesenkt werden kann. Eine Arretiereinrichtung 8 am Handgriff besteht aus einem Nocken 9 im Handgriff 7 und Rastungen 10 in einer Schiene oder einem entsprechenden Teil des Fahrzeugaufbaus.

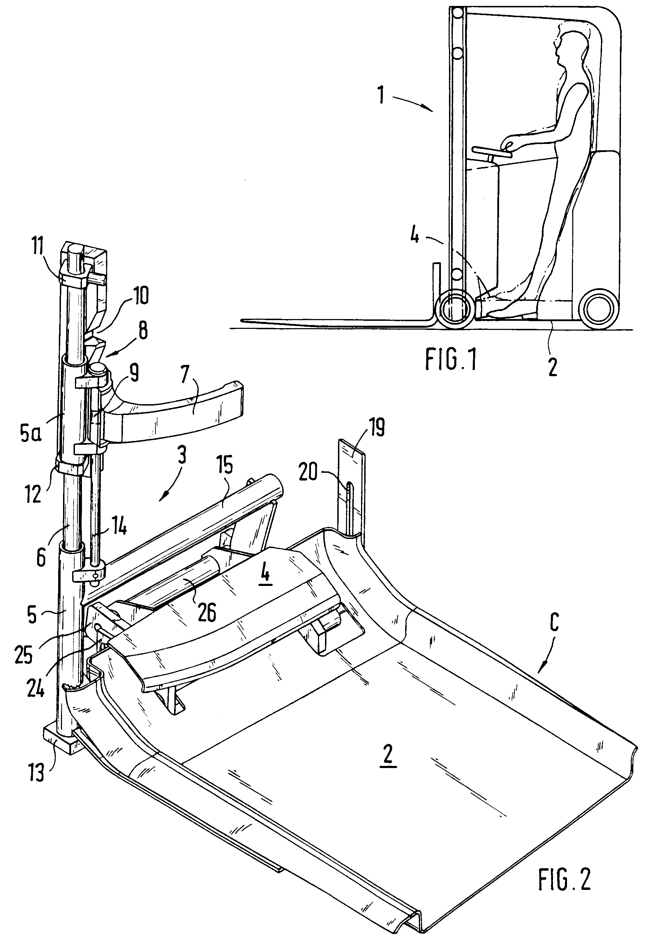

Wie in Fig. 2 näher dargestellt, ist die Säule 6 über drei Lagerstellen 11, 12 und 13 am Fahrzeugaufbau gehalten, die gleichzeitig als Anschläge für die beiden Verschiebehülsen 5 und 5a dienen Diese sind über eine Stange 14 fest miteinander verbunden. Es können aber auch bauartbedingt nur zwei Lagerstellen 11 und 13 vorgesehen sein, wobei die Lagerhülse dann einteilig durchgehend ist.

In der einen obenliegenden Verschiebehülse 5a ist der Handgriff 7 schwenkbar gelagert. Die untere Verschiebehülse 5 ist mit quergerichteten Trägern 15 und 16 verbunden, wobei der obere Träger 15 über ein Trägerblech 18 den Träger 16 abstützt und dieser endseitig in einem Widerlager 19 mittels eines Zapfens oder dergleichen in einem Schlitz 20 in Hochrichtung geführt ist. Mit dem Querträger 16 sind in Fahrzeuglängsrichtung sich erstreckende Stützen 21 und 22 für die Bodenplatte 2 verbunden, wobei die eine Stütze 21 noch an der weiteren Verschiebehülse 5 befestigt ist.

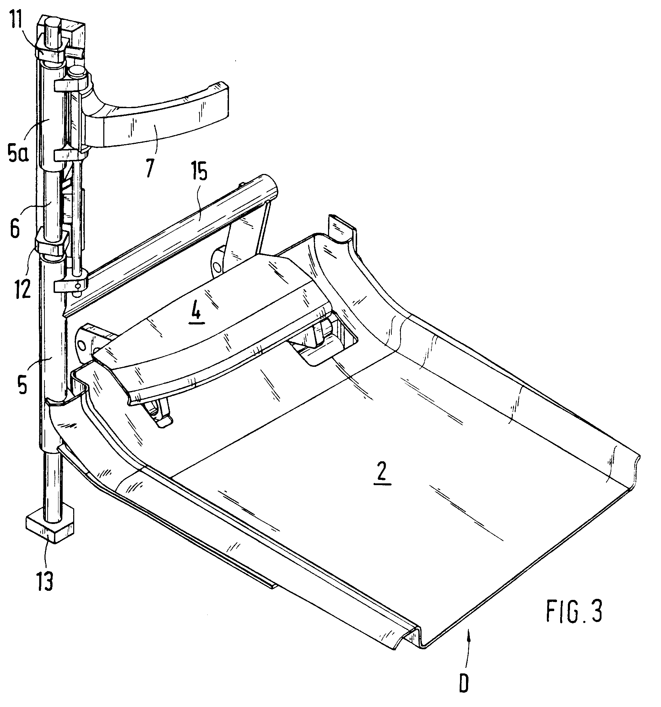

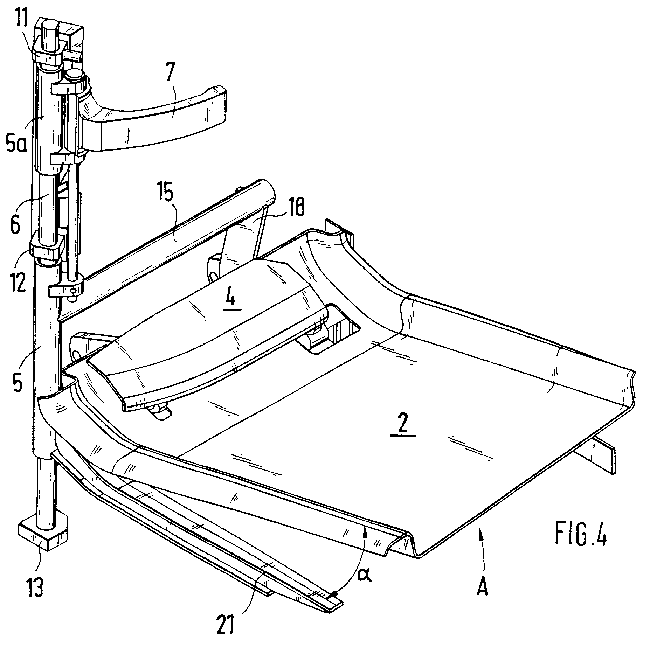

Die Bodenplatte 2 ist über Schwenkarme 25 auf einer Achse 23, die in Lagerarmen 24 des Querträgers 16 gehalten wird, unter einem Winkel alpha in eine Bremsstellung A hochschwenkbar bzw. in eine Nicht-Bremsstellung D runterschwenkbar, wie in den Fig. 3 und 4 näher gezeigt ist. In der Nicht-Bremsstellung D liegt die Bodenplatte 2 auf den Stützen 21 und 22 auf.

Gleichzeitig ist in den Schwenkarmen 25 der Bodenplatte 2 eine Achse 26 für die Pedalplatte 4 gehalten. Die Schwenkachsen 23 und 25 können auch achsgleich angeordnet sein. Bei einem Verschwenken der Bodenplatte 2 wird somit die Pedalplatte 4 entsprechend mitverschwenkt.

Die Verschiebehülsen 5 und 5a können zur Anhebung der Bodenplatte 2 eine unterstützende Einrichtung aufweisen, wie beispielsweise eine Gasfeder, eine Spiralfeder oder entsprechend wirkende Mittel.

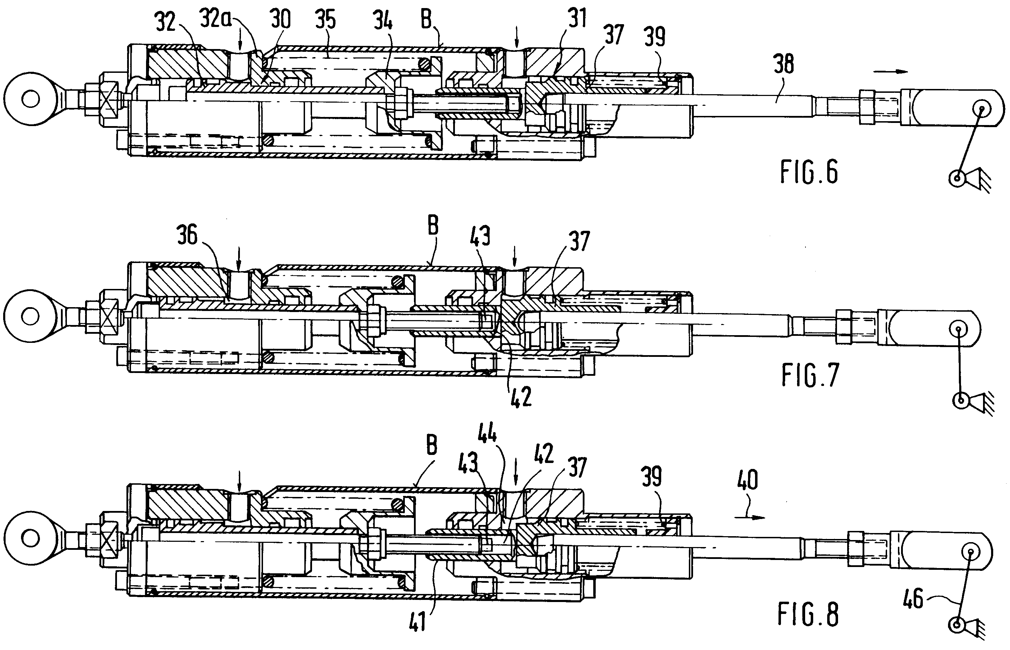

In den Fig. 6 bis 8 sind die verschiedenen Stellungen der Kolbeneinheiten 30 und 31 im Bremszylinder B bei Betätigung der Feststellbremse über die Bodenplatte 2 und bei Betätigung der Betriebsbremse über die Pedalplatte 4 dargestellt.

Im Bremszylinder B sind die beiden Kolbeneinheiten 30 und 31 hintereinander liegend angeordnet. Jede Kolbeneinheit ist unabhängig von der weiteren Kolbeneinheit, d.h. sie sind getrennt voneinander im Bremszylinder B gehalten.

Die eine Kolbeneinheit 30 für die Feststellbremse weist einen druckbeaufschlagten Kolben 32 mit umgebenden Anschlagteil 32a und ein mit diesem über eine Schraube 43 verbundenes Druckstück 34 auf. Zwischen diesem Druckstück 34, welches einen Federteller bildet und dem Anschlagteil 32a ist eine Druckfeder 35 angeordnet, die bei Stellung der Bodenplatte 2 unter dem Winkel alpha die Feststellbremse schließt. Wenn die Bodenplatte 2 mit der Bedienperson belastet ist, wird ein Zwischenraum 36 druckbeaufschlagt und der Kolben 32 fährt zurück und die Feststellbremse ist geöffnet, was in Fig. 7 gezeigt ist.

Die Kolbeneinheit 31 für die Betriebsbremse, welche über die Pedalplatte 4 betätigt wird, weist eine mit einer Stange 38 zur Verbindung mit einem Bremshebel 46 für die Bremse verbundenen Kolben 37 auf. Dieser Kolben 37 wird über eine Druckfeder 39 in einer Position gehalten, bei der die Betriebsbremse geöffnet ist, wie ebenfalls Fig. 7 zeigt. Bei einer Betätigung bzw. bei einem Niederdrücken der Pedalplatte 4 wird der Zwischenraum 44 mit Druck beaufschlagt und die Stange 38 verschiebt sich in Pfeilrichtung 40 und betätigt die Betriebsbremse. Am Kolben 37 ist ein Zapfen 41 angeordnet, der stirnseitig eine Bohrung 42 aufweist, in welche das Ende der Stange 43 eingreift.

## Patentansprüche

1. Flurförderfahrzeug, insbesondere Stapler mit einer Bremseinrichtung und einer verstellbaren Bodenplatte, die über eine Vorrichtung in Hochrichtung geführt und über eine Arretiereinrichtung in mehreren Arbeitspositionen gehalten wird, dadurch gekennzeichnet, daß die Bodenplatte (2) über ein Hubgestell (3) auf einer einseitig des Fahrzeugs angeordneten Säule (6) in Hochrichtung geführt ist und die Bodenplatte (2) als Betätigungsplatte für eine Feststellbremse ausgeführt ist und mit einer Pedalplatte (4) für eine Betriebsbremse am Hubgestell (3) auf Achsen (23 und 26) schwenkbar angelenkt ist.

2. Fahrzeug nach Anspruch 1, dadurch gekennzeichnet, daß in der Bodenplatte (2) die Pedalplatte (4) integriert angeordnet ist, welche über eine Steuereinrichtung unabhängig von der über die Bodenplatte (2) betätigten Feststellbremse bedienbar ist.

3. Fahrzeug nach Anspruch 1, dadurch gekennzeichnet, daß die Säule (6) über Halterungen (11, 13 bzw. 11, 12 und 13) am Fahrzeugaufbau befestigt ist und aus einem Rohr besteht, auf dem mindestens eine Verschiebehülse (5, 5a) des Hubgestells (3) geführt ist, die mit einem unteren Querträger (16) zur Aufnahme von Stützen (21 und 22) für die Bodenplatte (2) verbunden ist und ein weiterer oberer Querträger (15) mit der einen Verschiebehülse (5) befestigt ist und sich endseitig an einem Trägerblech (18) abstützt.

4. Fahrzeug nach Anspruch 1 oder 3, dadurch gekennzeichnet, daß der untere Querträger (16) mit seinem einen freien Ende in einem Widerlager (19) des Fahrzeugaufbaus geführt ist und Lagerarme (24) für die Schwenkachse (23) der Bodenplatte (2) aufweist, in denen die Schwenkarme (25) der Bodenplatte (2) gehalten sind und in diesen eine weitere Schwenkachse (26) für die Pedalplatte (4) gelagert ist.

5. Fahrzeug nach Anspruch 1 oder einem der vorhergehenden Ansprüche, dadurch gekennzeichnet, daß die Verschiebehülse (5a) mit einem verschwenkbaren Handgriff (7) verbunden ist, der eine Arretiereinrichtung (8) umfaßt, welche aus einem Nocken (9) am Handgriff (7) und mit diesem korrespondierende übereinander angeordnete Rastungen (10) am Fahrzeugaufbau besteht.

6. Fahrzeug nach Anspruch 1 oder einem der vorhergehenden Ansprüche, dadurch gekennzeichnet, daß die Säule (6) wenigstens zwischen zwei Halterungen (11 und 12) eine Verschiebehülse (5 und 5a) aufweist, die über eine Stange (14) fest miteinander verbunden sind und in einer unteren Stellung (C) der Bodenplatte (2) die obere Verschiebehülse (5a) auf der mittleren Halterung (12) und die untere Verschiebehülse (5) auf der unteren Halterung (13) aufliegt.

7. Fahrzeug nach Anspruch 1 oder einem der vorhergehenden Ansprüche, dadurch gekennzeichnet, daß die Verschiebehülse (5 und 5a) mit einer die Hochbewegung der Bodenplatte (2) unterstützenden Einrichtung verbunden ist.

8. Fahrzeug nach Anspruch 7, dadurch gekennzeichnet daß die unterstützende Einrichtung aus einem Feder- bzw. Gasfederelement besteht.

9. Fahrzeug nach Anspruch 1 oder einem der vorhergehenden Ansprüche, dadurch gekennzeichnet, daß die Bodenplatte (2) und die Pedalplatte (4) jeweils über ein Steuerventil druckbeaufschlagend auf einen Bremszylinder (B) zum Betätigen einer Bremse einwirkt und der Bremszylinder (B) zwei hintereinanderliegende Kolbeneinheiten (30 und 31) aufweist, wobei die erste Kolbeneinheit (30) zum Betätigen der Feststellbremse über die Bodenplatte (2) und die zweite Kolbeneinheit (31) zum Betätigen der Betriebsbremse über die Pedalplatte (4) dient.

10. Fahrzeug nach Anspruch 1 oder einem der vorhergehenden Ansprüche, dadurch gekennzeichnet, daß die erste Kolbeneinheit (30) zur zweiten Kolbeneinheit (31) im Bremszylinder (B) derart angeordnet ist, daß über jede Kolbeneinheit unabhängig von der weiteren Kolbeneinheit eine Verstellung einer gemeinsamen mit der Fahrzeugbremse verbundenen Kolbenstange (38) ausführbar ist.

11. Fahrzeug nach Anspruch 1 oder einem der vorhergehenden Ansprüche, dadurch gekennzeichnet, daß die eine Kolbeneinheit (30) für die Feststellbremse einen druckbeaufschlagten Kolben (32) und ein mit diesem über ein Verbindungselement (43) verbundenes Druckstück (34) aufweist und zwischen dem Druckstück (34) und einem den Kolben (32) umgebenden Anschlagteil (32a) eine Druckfeder (35) angeordnet ist.

12. Fahrzeug nach Anspruch 1 oder einem der vorhergehenden Ansprüche, dadurch gekennzeichnet, daß die Kolbeneinheit (31) für die Betriebsbremse eine mit einem Zapfen (41) versehenen Kolben (37) aufweist und der Zapfen (41) mit einer Bohrung (42) versehen ist, in der eine Stange (43) der ersten Kolbeneinheit (30) angeordnet ist und am abgekehrten Ende des Kolbens (37) die Kolbenstange (38) für die Bremse vorgesehen und der Kolben (37) über eine Druckfeder (39) entgegen der Wirkrichtung zum Bremsen abgestützt ist.
